# EUROPEAN PATENT SPECIFICATION

(11) **EP 0 339 697 B1**
(45) Date of publication and mention of the grant of the patent: **20.12.1995**
(21) Application number: 89200771.7
(22) Date of filing: 24.03.1989
(51) Int. Cl.: H04M 11/06, H04M 11/00

(54) **Method and apparatus for teleprinting public services data at the subscriber**
Verfahren und Vorrichtung zum Fernschreiben von Daten des öffentlichen Dienstes bei den Teilnehmern
Méthode et appareil pour la téléimpression de données du service public chez l'abonné

(30) Priority: 31.03.1988 IT 2004888
(43) Date of publication of application: 02.11.1989
(73) Proprietor: Industria Grafica Meschi S.r.l., I-57100 Livorno (IT)
(72) Inventor: Meschi, Luciano, I-57012 Castiglioncello (Livorno) (IT)
(74) Representative: Dragotti, Gianfranco

(56) References cited:
- US-A- 4 086 434
- REVIEW OF ELECTR. COMM. LAB., vol. 29, no. 7/8, July-August 1981, pages 663- 679, Tokyo, JP; H. TAKEDA et al.: "FICS-1 switching system"
- COMMUTATION ET ELECTRONIQUE, no. 51, October 1975, pages 67-88, Issy-les-Moulineaux, FR; Ch. Carrouge et al.:" Un terminal économique: le poste à clavier à fréquences vocales"
- JAPAN TELECOMMUNICATIONS REVIEW, vol. 25, no. 4, October 1983, pages 288-292; K. ONO et al.: "Remote meter reading system utilizing the no-ringing circuit service on existing telephone lines"

## Description

The present invention relates to a system and an apparatus to allow data and messages to be printed or written onto a paper support or the like, also in an answer back or interaction. The data and messages serving for the delivery of bills or invoices, for interpersonal communications or for requesting and supplying information between an agency and an individual user or between users.

At the present time the agencies supplying products or services to the public request the payment of said products or services through a network formed by one's own bureaucratic organization, based on internal personnel, and through external organizations, such as mail delivery services and money collecting services like mail and/or bank services.

Among these agencies, those which are enabled to keep the measurement means of the products or services at their premises, in order to obtain data from which the bills to be sent to the users can be deduced, do not face particular difficulties apart from using a great deal of personnel for the preparation of said bills and from being compelled to make re-course to mail delivery services (such as mail services and delivery services) with all the possible drawbacks such as delays and/or miscarriages of mail as caused by these services.

The agencies or utilities which, owing to the nature of the services being supplied, such as the agencies distributing electricity, gas, tap water etc., are compelled to maintain the meter at the user house, suffer from the further drawback of being compelled to use personnel attending to the meter reading, in order to periodically read the meters and obtain the data from which the bills to be sent to the users are drawn.

As for budget reasons said agencies have a limited number of employees attending to the meter reading, said readings are carried out at rather long time intervals, of about four to six months, whereas for financial reasons it is convenient to bill the sums for the services rendered every two months, mainly to avoid an excessive financial exposure and to keep the amounts of the single bills within reasonable limits.

However, in order to effect a billing every two months, against a reading of the effective consumption every four or six months, invoices are to be issued on alleged consumptions which, although well calculated, being based both on general statistical data for each category of user and on historical consumption data of each user, may give place to a number of rather trublesome problems, such as the alternation of bills of too much different amounts, the obligation of reimbursements to an user after a number of too high amount bills with respect to the effective consumptions, misunderstandings owing to the sudden stopping of the service supply etc.

Moreover the jurisprudence of several countires is oriented to consider as invalid the bills issued for presumptive consumptions, whereby a number of agencies may be exposed to objections about the legal basis of these bills.

One object of the present invention is that of providing, through a teleprinting apparatus at a telephone user, information coming from public service agencies or the like, mainly relating to the amounts of bills which the user has to pay for a service supplied by one of said agencies. Another object of the present invention is that of providing an apparatus, to be installed at a telephone user, to obtain thereat a printing of billing data both on a simple paper support and on forms suitable for the carrying out of payment of bills at money payment services, such as post offices or bank offices.

A further object of the present invention is that of providing an apparatus, to be installed at a telephone set, provided with displaying optical means in order reproduce in not permanent manner information and messages for the user, coming from an agency or another user.

Another object of the present invention is that of providing an apparatus, to be installed at a telephone set, provided with transmission means for printed message, such as an alpha-numeric key board, permitting the user to send messages to an agency or to another user.

A further object of the present invention is that of providing an apparatus , to be installed at a telephone set, provided with an optical-electronic reading means, adapted to read messages written on special forms to permit communication with other users or with agencies for sending instructions or for asking for information.

Another object of the invention is that of providing an apparatus to be installed at a telephone set, provided with interface and connection means with an outer computer (personal computer) owned by the user, in order to permitt communication between said personal computer and one of said agencies (especially with the computer machine of said agency) as well as between personal computer of different users.

Another object of the present invention is that of providing an apparatus to be installed at an user, provided with reading and interfacing means for meters of products or services, installed at the user, in order to permit a telereading or said meters by the agencies supplying the product or services.

In the prior art are well known reporting systems which involve polling or interrogating home units from a central office computer, by dialling-up through a special equipment each customer's phone on a montly or bimontly basis and receiving from a reply unit at home coded data, sent upon command, corresponding to meter readings.

This kind of reporting systems have many drawbacks comprising the ringing of the home phone set on every meter interrogation call which can be a serious source of nuisance and misundertandings for the customer who, for example, could answer by mistake the phone during data transmission, interrupting it and needing the repetition of the call with additional communication problems.

The above drawback could be overcome by using one of the "no-ringing circuit services" disclosed in an article in Japan Telecommunication Review Vol. 25 (1983) No.4, October 1983, having title "Remote Meter Reading System Utilizing the No-Ringing Circuit Service on Existing Telephone Lines", or a "no-ringing termination for facsimile communications" disclosed in an article in Review of the Electrical Communication Laboratories Vol. 29, No. 7/8, July-August 1981 having title "FICS-1 Switching System", both using for calling pusposes instead of common high level and low frequency call signals (for example 100 volt and 25 Hz AC signals typically useful for actuating electromechanic ring-bells), someone of the so-called tones which are low level singals at some acoustic frequency (for example between 1000 and 2000 Hz) not able, of course, to actuate any ring-bell because of their too low level and too high frequency, but able to actuate electronic devices for providing commands for data transmission.

The above no-ringing call systems work very well, but have the main drawback to require the installation of a special no-ringing service provided by phone public agencies in some public switching system, meaning that they cannot operate on telephone lines not provided with said service.

A remote condition reporting system disclosed by US-A-4,086,434 partially overcomes the above mentioned drawbacks, without needing any no-ringing call service, by always making start calls for data transmission just from the equipment at the customer to the computing center at the agency or utility, for remote meter readings, to banking centers for fund transfert communications, or to other authorities, such as police, fire departments, etc... for emergency messages, so that the customer phone set is never called by external data centers or the like, and the customer is always sure that the received calls regard just phone communications.

Also this system works rather well, however, has the serious limitation that the computing centers, the banks and the other authoritiesd cannot call the system on their own initiative and, consequentely, cannot send any message to the system and the customer, apart voice communications through the phone set. It means that the above prior art system cannot provide any information about billings and any service of remote invoicing forming one of the objects of the present invention.

The present invention can provide all the services mentioned among the objects thereof because it is possible by it both to call computing centers of agencies and banks, for sending them messages regarding meter readings and/or fund trasfer communications, and receive calls from the computing centers of the agencies commands for executing on-line readings of the meters, being said calls provided by the usual ring signal, however processed, by means of a proper firmware inserted into a microprocessor included in the apparatus of the present invention to prevent the ringing of the bell at the phone set, in case of phone calls coming from data processing and transmitting centers, and allow bell ringing in case of phone calls coming from other phone sets.

Briefly stated, the present invention consists of a method for operating a teleprinting apparatus to be installed at a telephone user place comprising a microprocessor and a modem unit connecting a telephone line either to said microprocessor or to a standard telephone set in accordance with the type of ring signal received from said modem, said method being characterized in that the microprocessor discriminates a ring signal of a common phone call from a ring signal of data-transmission through a distinctive parameter of said ring signal, such as the time duration of the first ring signal, so as to connect the phone line either to the telephone set or the microprocessor, said microprocessor provides an aknowledgement of the received data, making a distinction between valid or legal data, for which an action is to be carried out and not valid or illegal data, for which no action must be started, apart from warning about their illegality, and further characterized in that, when said microprocessor receives first valid or legal data, it records them, then waits for second, third, fourth data, and so on, and at the receiving of an end of transmission signal, it assesses whether the data are transmitted with a redundant code, suitable to avoid loss of information, sending an answer of not accepted data, if said code is not present and an answer of accepted data if it is present, carrying out the command considered as legal and transmitted with redundant code and then maintaining the process until the arrival of a release signal through which the modem disconnects the microprocessor from the telephone line while in response to and depending on the received valid data, said microprocesor is connected to peripheral units associated thereto, such as a printer, or a display, to transfer them the recorded valid data, or to an optical reading unit for reading written messages and further transferring the related data from the apparatus to external centers.

Alternatively, said method for operating a teleprinting apparatus is characterized in that said microprocessor according to the received valid data, provides to connect the line with an interface to a personal computer at the user place.

According to another preferred embodiment, the microprocessor controls the modem to permit an answer transmission of the user to an agency or utility.

More specifically, said answer may be provided by a peripheral keyboard unit permitting typing and sending of messages.

Alternatively, said answer may be provided by a peripheral optical reading unit suitable to read messages, written on proper forms, provided with a marked zone by which data of sliding speed of said forms are provided in order to generate syncronism signals for characters written in aligned boxes according to proper rows.

Further alternatively, said premarked zone providing reading data, can be replaced by wheels moved by the sheets of said forms and actuating generators of syncronism signals.

A method for periodically transmitting, by means of the above method for operating a teleprinting apparatus, billing data to a user of a meter for measuring service and allowing the user to control and pay the bill to a supplier of the service at a telephone user, comprising the steps of:
i) collecting service data referred to a service utilized by the user from a user meter associated with a telephone set installed at the telephone user, for a central computer installed at a supplier location and storing said service data in a memory of said central computer;
ii) processing the service data and a corresponding service rate for said service data stored in the memory of the central computer to obtain a service charge related to a given period of time, including additional charges and taxes;
iii) assembling said service data, service rate and service charge with every other data related to the user and stored in the memory of the central computer and intended to be shown in a bill;

is characterized by:
a) periodically sending, through said telephone set at the telephone user, the assembled data related to the user from the central computer installed at the supplier location to a microprocessor, incorporated in a computing and printing unit, installed at the user location and storing said data in a memory of said microprocessor, said assembled data being sent trough a communication line;
b) sending a command from the central computer to the microprocessor through said communication line for printing the data stored in said microprocessor on a blank bill form available to the user at the supplier location; and
c) printing on the blank bill form, supplied by the user to a printing machine, the resulting bill form, the document allowing the user to control the billed data and carry out payment for the received service.

Preferably, the method performs operations of collecting and storing the service data in the central computer through the communication line connecting said central computer with said microprocessor in which are stored the service data coming from the meter at the user.

More preferably, the method periodically performs the operations of collecting and storing the service data in the central computer.

In addition, the method comprises the further step of:
sending a message from the central computer to the microprocessor, through said communication line, for signalling innaccuracies of the payment to the user and advices for remedies.

Further the method comprises the step of:
sending a message from the processor to the central computer, through said communication line for requesting information, explanations and corrections of at least a part of the assembled data.

A use of the method for operating the present teleprinting apparatus at a telephone user place to permit information, pertaining to billing and payments of meter measurable services based on data of meters, to relate the measurement of produtcs or services supplied to each user at a user site to a central accounting computer at another site, is characterized by the steps of:
a) sending data from said accounting computer through the telephone line to provide a billing message to each user provided with said teleprinting apparatus prior to billing;
b) sending every data necessary for preparing information pertaining to said billing from the central computer through a receiving modem, and a computing and printing unit for printing billing data onto a blank form;
c) controlling the operation of said printing unit, at the place of the telephone user, free from access by the user to said printing unit at the user place; and
d) printing with a printer billing data at the user site onto said form for having a printed form.

In additon, the method is characterized in that the step of carrying out includes effecting further action using the form with data supplied by said computing and printing unit.

Further, the method includes transmission to a remote site using said form, with the data issued by said computing and printing unit, in a form of different data.

Still further, the method includes the use of data produced by said computing and printing unit at the user site for sending data instructions to a remote site.

Preferably, the method includes the use of a keyboard and display assembly for transmitting the data instructions to said remote site through a telephone line using said computing and printing unit and said modem.

Alternatively, the method includes writing the instruction onto a communication form and using an optical reading unit connected to an apparatus at the user site to read the communication form.

Additionally, the method includes the use of counters present at said other site for providing data to the accounting computer for preparation of said billing message, and sending the billing message from said accounting computer to said user site, including sending special dispositions such as parameters for limitation or suspension of service based on particular situations.

Further, the method includes using the meter present at the user site and the accounting computer at the other site to send periodic instructions to the user to read the meter and transmitting the data read from the other site, said accounting computer then sending billing data, suitable for the compilation of bills and/or payment forms, to the user site, by means of the computing and printing unit at the user site.

Still further, the method includes using optical readers for directly reading the meter at the user site by the accounting computer, and periodically energizing said meter by said computers through an interface between said meter and said calculating and printing unit at the user, and enabling the computer at the other site to send to said user special dispositions, such as commands for the limitation or suspension of services owing to a particular situation.

The features and advantages of the present invention will be made more evident from the description of the preferred embodiment thereof given as an example and provided with the enclosed drawings in which:
figure 1 is a block diagram of an apparatus embodying the system according to the present invention;
figure 2A is a first portion of a flow chart for the "modem" portion of an apparatus embodying the system according to the present invention;
figure 2B is a second part of the same flow chart the first one being depicted in figure 2A;
figure 3 is a schematic diagram of a system for services billing such as a telephone service, carried out according to the prior art means;
figure 4 is a schematic diagram of a billing system, similar to that of figure 3, carried out with the apparatus of the system according to the present invention;
figure 5 is a schematic diagram of a billing system for a service the meter device of which, such as a meter, is installed at the user and can be read by the same,
figure 6 is a schematic diagram of a billing system, like that of figure 5, in which moreover the meter can be directly read from the apparatus by means of an interface system with the same;
figure 7 is a schematic picture of a form for message transmission which can be read by means of an reading auxiliary device which can be applied to the apparatus of the present invention;
figure 8 is a schematic picture of a form for information request to agency or organizationgs open to the public, which can be read by means of the same auxiliary reading device used for reading the form of figure 7.

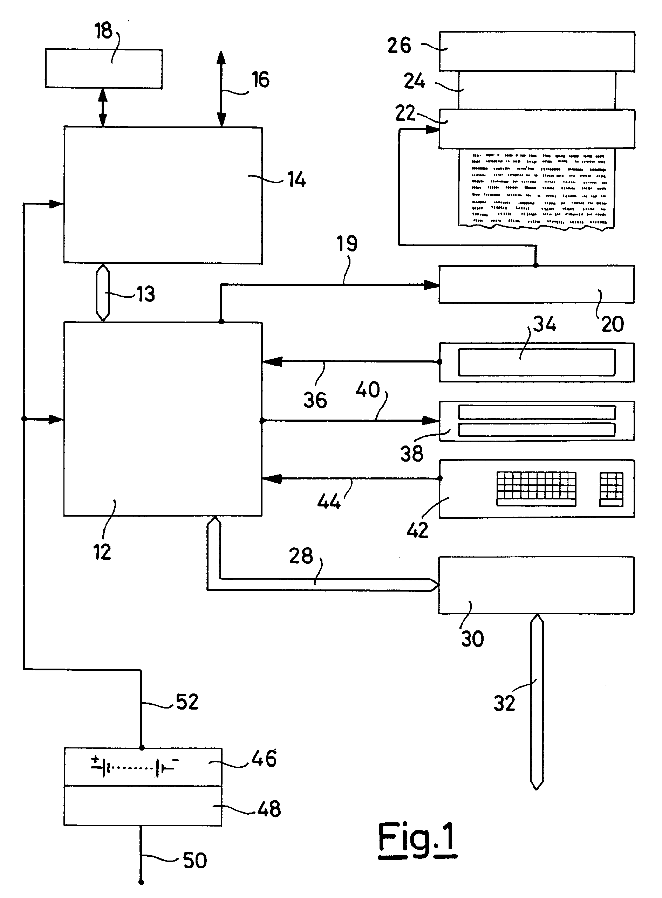

Referring to figure 1 , it is seen that an apparatus embodying the system according to the invention consists of a microprocessor 12 connected by a multiple line 13 to a modulating and demodulating device 14 hereinafter called "modem" which provides the interface between a telephone line 16 and said microprocessor 12 as well as with a telephone set 18.

Said microprocessor 12 is also connected through a line 19 and a control apparatus 20 to a printer 22 which, for example, carries out the printing onto a paper strip 24 which is unrolled from a roll or suitable cartridge 26. Said paper strip 24 can be a continous strip of white paper or a series of pre-printed forms, connected to each other by weakened regions to permit their subsequent detatchment, of the type of forms to be used for mail or office account payments.

Said microprocessor 12 is also connected through a multiple line 28 to an interface circuit 30 for the further connection through the line 32 to an outer computer such as a personal computer (not shown).

To said microprocessor 12 can be possibly connected also an optical reader 34, through a line 36, a display 38 through a line 40 , and a keyboard 42 through a line 44.

A buffer battery 46, maintained charged by a power supply 48 connected to a main line 50, supplies through a reserved line 52, the microprocessor 12 and the "modem" 14 to retain data and prevent an interruption of a possible connection in case of lack of main power.

For microprocessor 12 a number of commercially available microprocessors can be used.

However it is particularly preferred in the present embodiment to use as a microprocessor Toshiba TMP 84C 015 which has the advantage of integrating on the same "chip" also some peripheral components such as four timers, two adaptors for synchronous or asynchronous serial interface, two adaptor for 8 bit parallel interface and a so called watch dog timer. Of course to the microprocessor are connected and commonly supplied all the electronic components necessary for the operation thereof, such as for example ectrically programmable read only memories (EPROM), random access memories (RAM), quartz oscillators, decoding circuits , etc.

As the printer 22, one of a number of presently commercially available printers can be used , with the only limitation imposed by the size and by the possibility of interface and by power requirements of the printing member, possibly requiring drivers or buffers.

More specifically in the present embodiment a printer EPSON 3740 has been used, provided with an own control circuit which facilitate the task of the microprocessor 12 to carry out prints.

However said control circuit can be eliminated by having it function carried out by the microprocessor 12 itsef, using supplementary drivers or buffers.

Also the "modem" 14 can be selected among several available "modem" types, the only limitation being that said "modem" must be controlled from one of the serial adpators (gates) of the microprocessor 12.

Said "modem" is expected acknowledge a ring signal or "ring" with features different from the normal ring coming from telephone calls between normal users of the telephone service.

For example this ring can be of a different time duration with respect to the first ring or ring signal coming from a usual commutator and the system is then arranged for the filtering of said first ring preventing the ring signal for the apparatus from actuating the telephone ringing bell, by which the user would the disturbed with calls directed not to telephone communication but to communication with the apparatus of the present invention which consequently are of interest only for the "modem".

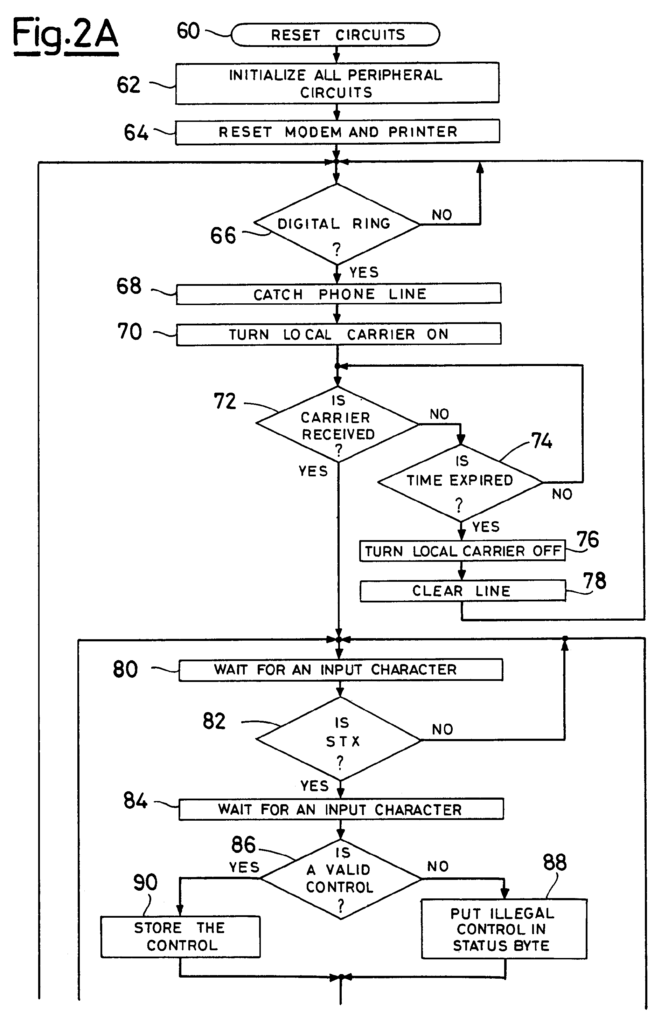

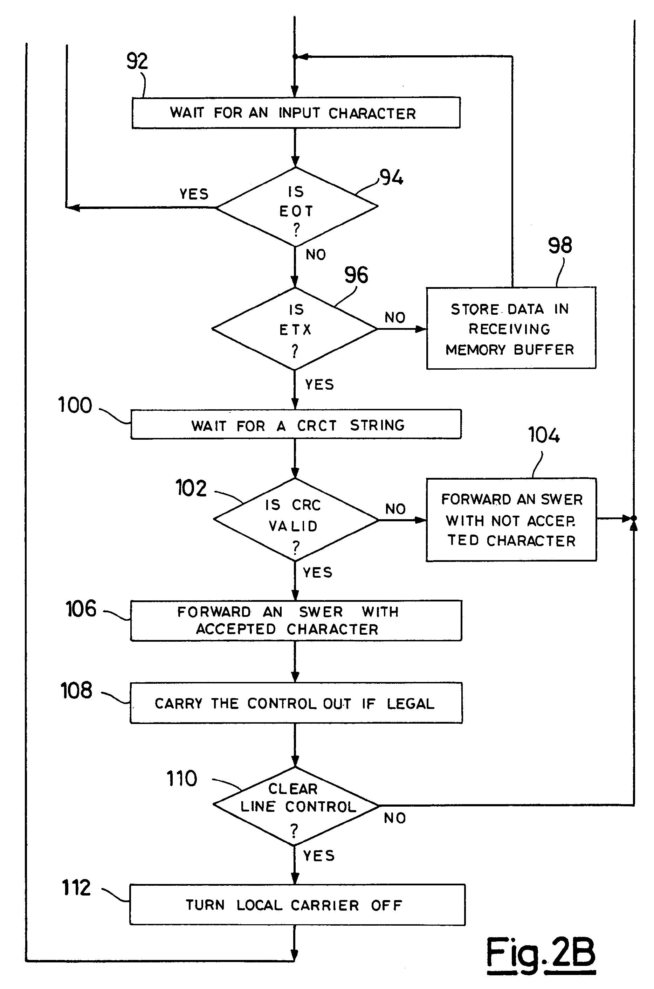

For example and to understand the operation of said "modem" reference is made to the flow chart illustrated in the figures 2A and 2B.

Said flow chart permits the "modem" to be connected to the telephone line when a ring signal or ring of the type indicating a call for data transmission and not for telephone conversation , for receiving data, for carrying out valid command and for releasing the line at the end of the transmission is received.

Among the commands accepted by the system of the present invention the following, for example , can be present:
(a) diagnostic, such as: indication of paper reserve in the container or cartridge 26, printing property, bills taken out by the client, etc.
(b) memory initialization:
(c) data reception for the printing of postal account forms;
(d) data reception for messages or bills;
(e) printing commands;
(f) line release.

The carrying out of the tasks of the "modem" is illustrated in a detailed manner in the flow chard of the figures 2A and 2B and particularly: the switching on of the apparatus resets all the resettable circuits as illustrated in the beginning block 60, causes the starting of the circuit of all the peripheral units and resets the "modem" 14 and the printer 22 bringing the head thereof in the normal starting position, as illustrated in the action blocks 62 and 64 respectively.

The arrival of the ring signal causes the length thereof to be evaluated by deciding through the decision block 66 whether it is the call for data transmission , or digital ring, or a normal call for telephone communication.

If the decision is that it is not a digital ring , the program comes back, immediately after to the block 64, otherwise it shifts to the action block 68 which causes the line to be engaged, namely the telephone line 16 is connected to the "modem" 14 and thus to the block 70 by which a local carrier signal is switched on permitting data transmission.

The next decision block 72 makes the decision whether the local carrier is received. If it is not received, a second decision block 74 control whether a waiting time is not lapsed. Until said waiting time is not lapsed a return to the block 72 takes place to possibly permit the operation in the case of carrier reception.

When said time is lapsed, an action block 76 switches off the local carrier signal and the neck block 78 releases the line by disconnecting it from the "modem" and making it available for the normal telephone calls.

In the case in which the local carrier is received (affirmative answer to the decision block 72) the action of the block 80 is adopted namely to wait an input character. A next decision block 82 evaluates whether said input character is a character of transmission starting.

If it is not the case, a return takes place to the waiting block 80, whereas if it is a transmission starting character a waiting block 84 is enabled for a second input character.

A decision block 86 indicates if the arrived command is a valid or not valid command, if it is not valid , said non valid or illegal command is placed in status byte in the block 88 and then discharged. If it is a valid command,it is recorded in the block 90.

Whichever is the destiny of the previous command, the "modem" is shifted to wait for a next inlet character as indicated by the action block 92. After this action in the decision block 94 it is assessed whether the time is lapsed.

If the time is lapsed, a return takes place to the block 80 to wait for a next inlet character; if it is not lapsed, in the decision block 96, it is assessed whether the transmission is ended. If it is not ended, the data are saved in an auxiliary memory or "receiving buffer" within the block 98 and a return takes place to the block 92 to wait for another input character.

If it is ended a string is awaited for carrying a redundant transmission code in the action block 100. By means of the decision block 102 it is assessed whether the redundant code is valid. If it is not valid, an answer is sent with the non-accepted character according to the block 104 and the system returns to wait for an inlet character to the block 80. If it is valid, an answer is started with the accepted character according to the block 106 and the command is carried out, if legal, according to the block 108. At that point a decision block 110 thus verify whether the command is that of releasing the telephone line. If it is not so, the procedure comes back to the block 80 for waiting for an inlet character and the procedure is repeated from that point. If it is so, in the block 112 the switching off of the local carrier and the releasing of the telephone line 16 from the "modem" 14 are carried out and the procedure is placed in waiting list tc evaluate through the decision block 66 whether the next ring signal is a digital ring or a normal call for telephone conversation.

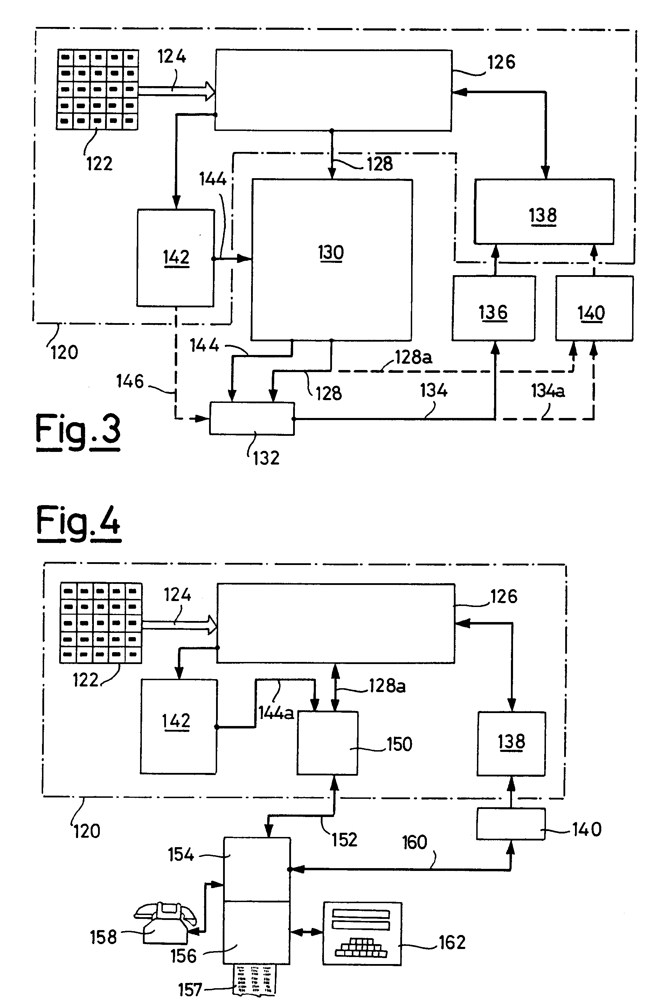

Reference is now made to the figures 3 to 6 to understand how the system and the apparatus according to the present invention may operate in their essential version.

The example is considered as an actual reading and billing system of a service such as the telephone service. In this connection within the organization of an agency 120 for instance playing the telephone service, a plurality 122 of unit counters is present which are connected by an interface system 124 with a central computer 126 of the agency by which there are periodically calculated bills 128 to be sent through a mail delivery service 130 to each user 132 said bills 128 usually comprising a sheet bearing the billing data joined to a payment form by means of post office account.

The user 132 takes the portion 134 of the postal account form , contained in the bill 128, and takes care of the payment through a postal office 136, which postal office 136 informs a collecting center 138 of the agency 120 about the payment which took place whereby the central computer 126 may have notice of the paid bills. Alternatively, the user 132 may give instructions 134a to a bank service 140 to accept bills 128a coming from the agency 120 and takes care of payment at the collecting center 138 of the same agency.

On the basis of the information coming from the collecting center 138, the computer 126 takes further decision such as reminders, injunctions, orders of service suspensions and like in the case of omitted payments, said decision being transmitted to a public relation center 142 in form of messages 144 to be sent to the users 132 through the mail delivery service 130 or as interventions 146 on the same user.

With the system and apparatus according to the present invention the same agency 120 can be reorganized in the following manner indicated in figure 4.

The unit meters 122 through the interface system 124 provide data to the central computer 126 by means of which billing messages 128 are periodically issued and sent through a proper "modem" 150 to a telephone line 152 connected to a receiving "modem" 154 at a user which controlls a computing and the printing unit 156, according to the present invention, by emitting messages 157 on a proper form or paper strip.

To the said receiving "modem" 154 a normal telephone set 158 is also connected, which is useful both for the normal telephone trafic and for the exchange of information between the user and the agency or other organizations, such as the aforesaid bank service 140.

The message 157 relating to the service billings can be controlled by the user which through any suitable means may send timed instructions 160 to the bank service 140, said means possibly consisting of oral messages through the said telephone set 158, written messages composed by means of the keyboard and display assembly 162, or by means of a command for billing data forwarding , which are temporarily recorded in the computing unit 156 by means of a proper key on said key board.

As the obvious alternative, in order to take care of the aforesaid payments, the user can make use of the postal account form, issued from the printer 22 , at any postal office according to the standard practice. The computer 126, in the case of omitted payments, may inform the public relations center 142, which may send reminders or injunctions messages 144a, or also commands of limitation or suspension of the service which may influence the operation of the apparatus at the user, up to the complete switching off of the same.

A substantially like procedure can be used for other service supplied by agency dealing with the public, such as agencies supplying electric power (utilities), gas, water, etc.

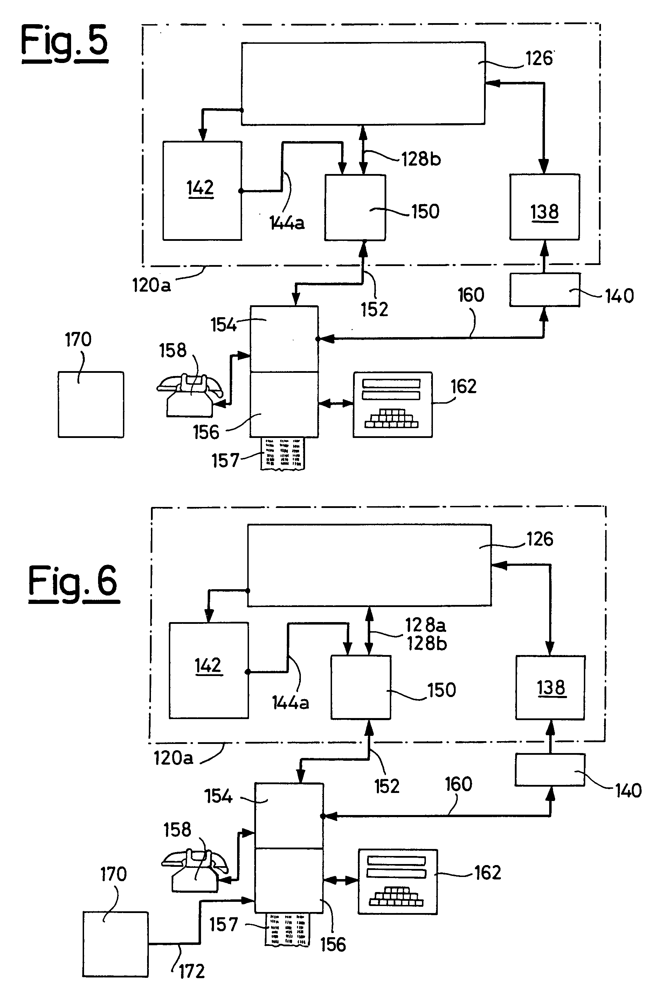

According to a first and simplest embodiment of a system and apparatus according to the present invention, illustrated in the figure 5, which can be adopted by an agency 120a, supplying electric power or gas, said agency 120a is also provided with a central computer 126 issuing billing messages 128a to a transmission "modem" 150 which through the telephone line 152, transmits them to a receiving "modem" 154 which is present together with a computing and printing unit 156 as well as a normal telephone set 158 at one user, at which a meter 170 is also present for the measurement of the supplied product or service.

The procedure for the user of the system of the apparatus according to the present invention in the simplified embodiment of figure 5 can be the following one.

At periodical time intervals the central computer 126 of the agency 120a releases messages 128b requesting the reading of a meter 170 at the same user.

The user, upon receiving a message 157 requesting reading , which obviously comes through the telephone line 152, the receiving "modem" 154 and the computing and printing unit 156, then reads the meter 170 and or sends the reading data to the agency 120a using the telephone set 158 or, alternatively, the keyboard and display assembly 162, or by means an optical reader or analizer for message written on proper forms, more completely described hereinafter. The agency 120a, upon the reading data are received, takes care of the emission of a billing message 128a following the route and procedure like those illustrated in the embodiment of figure 4, including the payment procedures and/or the action to be taken in the case of omitted payment. According to a more sofisticated version, shown in figure 6, the meter 120 and the user is provided with an optical-electronic reader which, through a connection 172 , forwards the reading to the computing unit 156 which in turn send them upon request to the central computer 126 of the agency 120a automatically providing it with the reading data.

Upon said reading data being acquired, billing and payment procedure fully similar to those illustrated in figure 4 can be followed.

An additional version of the apparatus according to the present invention may include an opticall reader of message written on proper forms, such as the reader 34 indicated in figure 1, said optical reader being one of many of opticall readers consisting of a linear assembly of photo diodes of a charge coupling device, (CCD) comprising suitable electronic computing and coding circuits for the signal so widespread diffused and not known in the field of the opto-electronics.

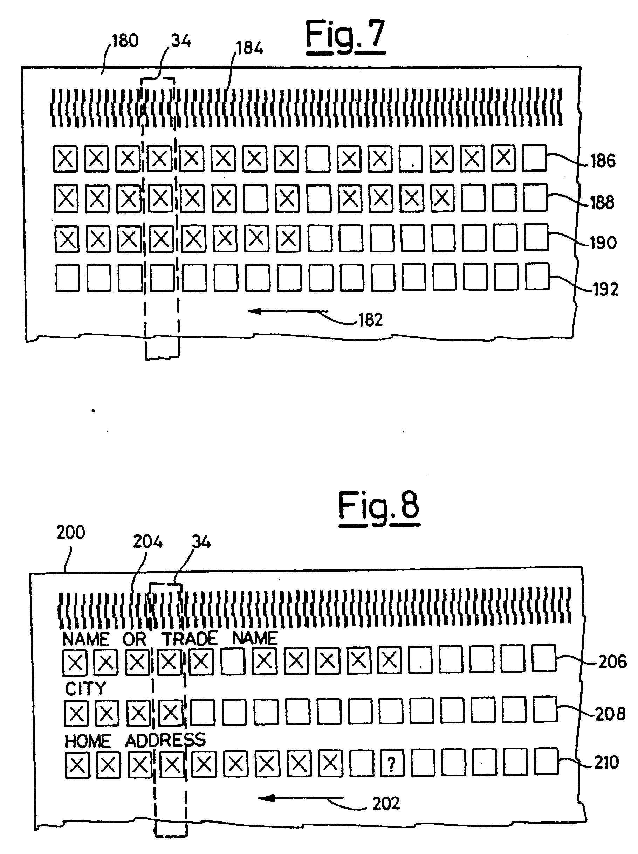

The forms for the use of said optical reader 34 can be for example of the two type respectively depicted in the figures 7 and 8.

The form 180, depicted in figure 7, can be used for the writing of a simple communicating message both from an user to service agency 120 or 120a or to bank institute 140 and between users provided with same apparatus according to the present invention.

Said form 180 is made to slide, for example in the direction of the arrow 182, under said optical reader 34. A pre-marked hatched zone 184 provides to the reader 34 information relating the sliding speed of the sheet and consequently of reading of the characters written in small box or casters, within rows 186-192, printed onto said sheet 180.

Alternatively, instead of the pre-market zone 184 a system of small wheels can be used, driven by the paper of the form 180, and acuating pulse generators by which further information on the paper displacing speed are supplied.

As already stated, onto said form communication to agency, such as data of meter readings, observations and/or message or autorization and payment instruction to bank institute can be written.

Another form, as the form 200 depicted in figure 8, can be particularly suitable to the request of information to a central agency such as a telephone service or a bank institute. Said form 200 always readeable by means of an optical-electronic reader 34, is compelled to slide in the direction of the arrow 202 under the said reader 34. A pre-market zone with small lines 204 provides to the reader information on the sliding speed of the sheet and thus of the of character reading written in the small boxes of the rows 206-210.

As particularly illustrated in figure 8, this form can be especially suitable to get information from telephone directories or the like for instance by writing in the first row of small boxes 206 the name and surname or corporation name of a subscriber, in the second row 208 the residing place and in the first row the address street and number, said data being more or less complete, it being mean that in the case of incomplete data the information service would provide, instead the information relating to only one subscriber, a list of information of all subscribers having in common the data indicated in the request.

The above described embodiment are only preferable embodiment as an example of the present invention and all the solution obviously equivalent which may be found by a skilled in the art upon reading aforesaid specification are covered.

## Claims

1. A method for operating a teleprinting apparatus to be installed at a telephone user place comprising a microprocessor (12) and a modem unit (14) connecting a telephone line (16) either to said microprocessor (12) or to a standard telephone set (18) in accordance with the type of ring signal received from said modem (14), said method being characterized in that the microprocessor (12) discriminates a ring signal of a common phone call from a ring signal of data-transmission through a distinctive parameter of said ring signal, such as the time duration of the first ring signal, so as to connect the phone line (16) either to the telephone set (18) or the microprocessor (12), said microprocessor (12) provides an aknowledgement of the received data, making a distinction between valid or legal data, for which an action is to be carried out and not valid or illegal data, for which no action must be started, apart from warning about their illegality, and further characterized in that, when said microprocessor (12) receives first valid or legal data, it records them, then waits for second, third, fourth data, and so on, and at the receiving of an end of transmission signal, it assesses whether the data are transmitted with a redundant code, suitable to avoid loss of information, sending an answer of not accepted data, if said code is not present and an answer of accepted data if it is present, carrying out the command considered as legal and transmitted with redundant code and then maintaining the process until the arrival of a release signal through which the modem (14) disconnects the microprocessor (12) from the telephone line (16), while in response to and depending on the received valid data, said microprocesor (12) is connected to peripheral units associated thereto, such as a printer (22), or a display (38), to transfer them the recorded valid data, or to an optical reading unit (34) for reading written messages and further transferring the related data from the apparatus to external centers.

2. The method for operating a teleprinting apparatus, according to claim 1, characterized in that, alternatively, said microprocessor (12) according to the received valid data, provides to connect the line (16) with an interface (30) to a personal computer at the user place.

3. The method, according to claim 1, characterized in that, the microprocessor (12) controls the modem (14) to permit an answer transmission of the user to an agency or utility.

4. The method, according to claim 3, characterized in that, said answer may be provided by a peripheral keyboard unit (42) permitting typing and sending of messages.

5. The method, according to claim 3, characterized in that, said answer may be provided by a peripheral optical reading unit (34) suitable to read messages written on proper forms (180; 200) provided with a marked zone (184; 204) by which data of sliding speed of said forms are provided in order to generate syncronism signals for characters written in aligned boxes according to proper rows (186-192; 206-210).

6. The method, according to claim 5, characterized in that, alternatively, said premarked zone (184; 204) providing reading data, can be replaced by wheels moved by the sheets of said forms (180; 200) and actuating generators of syncronism signals.

7. A method for periodically transmitting, by means of the method for operating a teleprinting apparatus according to any of the preceding claims, billing data to a user of a meter for measuring service and allowing the user to control and pay the bill to a supplier of the service at a telephone user, comprising the steps of:
i) collecting service data referred to a service utilized by the user from a user meter (170) associated with a telephone set (158), installed at the telephone user, for a central computer (126) installed at a supplier location (120) and storing said service data in a memory of said central computer (126);
ii) processing the service data and a corresponding service rate for said service data stored in the memory of the central computer (126) to obtain a service charge related to a given period of time, including additional charges and taxes;
iii) assembling said service data, service rate and service charge with every other data related to the user and stored in the memory of the central computer (126) and intended to be shown in a bill;
characterized by:
a) periodically sending, through said telephone set (158) at the telephone user, the assembled data related to the user from the central computer (126) installed at the supplier location (120) to a microprocessor (12), incorporated in a computing and printing unit (156), installed at the user location and storing said data in a memory of said microprocessor (12), said assembled data being sent trough a communication line (152);
b) sending a command from the central computer (126) to the microprocessor (12) through said communication line (152) for printing the data stored in said microprocessor (12) on a blank bill form (24) available to the user at the supplier location; and
c) printing the blank bill form (24) supplied by the user to a printing machine (156), the resulting bill form (157), the document allowing the user to control the billed data and carry out payment for the received service.

8. The method of claim 7, characterized by performing operations of collecting and storing the service data in the central computer (126) through the communication line (152) connecting said central computer (126) with said microprocessor (12) in which are stored the service data coming from the meter (170) at the user.

9. The method of claim 7, characterized by including periodically performing the operations of collecting and storing the service data in the central computer (126).

10. The method of claim 7, characterized by comprising the further step of: sending a message from the central computer (126) to the remote microprocessor (12), through said communication line (152), for signalling innaccuracies of the payment to the user and advices for remedies.

11. The method of claim 7, characterized by comprising the further step of: sending a message from the remote processor (12) to the central computer (126), through said communication line (152) for requesting information, explanations and corrections of at least a part of the assembled data.

12. Use of the method for operating a teleprinting apparatus according to claims I to 6, at a telephone user place to permit information, pertaining to billing and payments of meter measurable services based on data of meters, to relate the measurement of produtcs or services supplied to each user at a user site to a central accounting computer (126) at another site, characterized by the steps of:
a) sending data from said accounting computer through the telephone line (152) to provide a billing message to each user provided with said teleprinting apparatus prior to billing;
b) sending every data necessary for preparing information pertaining to said billing from the central computer (126) through a receiving modem (154), and a computing and printing unit (156) for printing billing data onto a blank form (24);
c) controlling the operation of said printing unit (156), at the place of the telephone user, free from access by the user to said printing unit (156) at the user place; and
d) printing with a printer (156) billing data at the user site onto said form (24) for having a printed form (157).

13. The use of the method according to claim 12, characterized in that the step of carrying out includes effecting further action using the form (157) with data supplied by said computing and printing unit (156).

14. The use of the method according to claim 13, characterized by including transmission to a remote site using said form (157), with the data issued by said computing and printing unit (156), in a form of different data.

15. The use of the method according to claim 14, characterized by including the use of data produced by said computing and printing unit (156) at the user site for sending data instructions (160) to a remote site (140).

16. The use of the method according to claim 15, characterized by including the use of a keyboard and display assembly (162) for transmitting the data instructions (160) to said remote site (140) through a telephone line (152) using said computing and printing unit (156) and said modem (154).

17. The use of the method according to claim 15, further characterized by including writing the instruction (160) onto a communication form (180) and using an optical reading unit (34) connected to an apparatus at the user site to read the communication form (180).

18. The use of the method according to claim 12, characterized by including use of counters (122) present at said other site for providing data to the accounting computer (126) for preparation of said billing message, and sending the billing message from said accounting computer (126) to said user site, including sending special dispositions (144a), such as parameters for limitation or suspension of service based on particular situations.

19. The use of the method according to claim 12, characterized by including using the meter (170) present at the user site and the accounting computer (126) at the other site to send periodic instructions (128b) to the user to read the meter (170) and transmitting the data read from the other site, said accounting computer (126) then sending billing data, suitable for the compilation of bills and/or payment forms, to the user site, by means of the computing and printing unit (156) at the user site.

20. The use of the method according to claim 12, characterized by including using optical readers (34) for directly reading the meter (170) at the user site by the accounting computer (126), and periodically energizing said meter by said computers (126) through an interface (172) between said meter (170) and said calculating and printing unit (156) at the user, and enabling the computer (126) at the other site to send to said user special dispositions (144a), such as commands for the limitation or suspension of services owing to a particular situation.

## Patentansprüche

1. Ein Verfahren zum Betreiben einer an einem Fernsprechteilnehmeranscbluß zu installierenden Fernschreibervorrichtung mit einem Mikroprozessor (12) und einer eine Telefonleitung (16) entweder mit dem Mikroprozessor (12) oder einem herkömmlichen Fernsprechgerät (18) verbindenden Modem-Einheit (14), entsprechend dem Typ des von den Modern (14) empfangenen Wählsignals,
**wobei das verfahren dadurch gekennzeichnet ist, daß**
der Mikroprozessor (12) ein Wählsignal eines herkömmlichen Telefonanrufs von einen Wählsignal einer Datenübertragung durch einen unterscheidenden Parameter des Wählsignals unterscheidet, beispielsweise der Zeitdauer des ersten Wählsignals, um so die Telefonleitung (16) entweder mit dem Fernsprechgerät (18) oder dem Mikroprozessor (12) zu verbinden, wobei der Mikroprozessor (12) eine Bestätigung der empfangenen Daten zur Verfügung stellt, die zwischen gültigen oder zulässigen Daten, für die ein Vorgang auszuführen ist, und nicht gültigen oder unzulässigen Daten, für die abgesehen vom Warnen bezüglich ihrer Unzulässigkeit kein Vorgang ausgelöst werden muß, unterscheidet, und zudem dadurch gekennzeichnet ist, daß, wenn der Mikroprozessor (12) erste gültige oder zulässige Daten empfängt, er diese aufzeichnet, dann auf zweite, dritte, vierte Daten usw. wartet, und Empfangen eines Übertragungsendsignals diese dahingehend auswertet, ob die Daten mit einem zum Verhindern eines Informationsverlustes geeigneten redundanten Code übertragen werden, und eine Antwort nicht akzeptierter Daten sendet, wenn der Code nicht vorhanden ist, und eine Antwort akzeptierter Daten, wenn er vorhanden ist, den als zulässig betrachteten und mit dem redundanten Code übertragenen Befehl ausführt, und dann die Verarbeitung bis zum Empfang eines Freigabesignals beibehält, durch welches das Modem (14) den Mikroprozessor (12) von der Telefonleitung (16) trennt, während im Ansprechen auf und abhängig von den empfangenen gültigen Daten der Mikroprozessor (12) mit ihm zugeordneten Peripherieeinheiten wie beispielsweise einem Drucker (22) oder einer Anzeige (38) verbunden ist, um die aufgezeichneten gültigen Daten zu diesen zu übertragen, oder mit einer optischen Leseeinheit (34) zum Lesen geschriebener Nachrichten und zum weiteren Übertragen der zugehörigen Daten von der Vorrichtung zu externen Hauptstellen verbunden ist.

2. Das Verfahren zum Betreiben einer Fernschreibervorrichtung nach Anspruch 1,
**dadurch gekennzeichnet, daß**
es der Mikroprozessor (12) entsprechend den empfangenen gültigen Daten alternativ ermöglicht, die Leitung (16) mit einer Schnittstelle (30) mit einem Personalcomputer an dem Teilnehmeranschluß zu verbinden.

3. Das Verfahren nach Anspruch 1,
**dadurch gekennzeichnet, daß**
der Mikroprozessor (12) das Modem (14) steuert, um eine Antwortübertragung des Teilnehmers an eine Vermittlung oder einen öffentlichen Versorgungsbetrieb zu erlauben.

4. Das Verfahren nach Anspruch 3,
**dadurch gekennzeichnet, daß**
die Antwort mittels einer peripheren Tastatureinheit (42) erzeugt wird, die das schreiben und Senden von Nachrichten erlaubt.

5. Das Verfahren nach Anspruch 3,
**dadurch gekennzeichnet, daß**
die Antwort mittels einer peripheren optischen Leseeinheit (34) erzeugt werden kann, die zum Lesen von auf geeignete Formulare (186; 200) geschriebenen Nachrichten geeignet ist, welche mit einer markierten Zone versehen sind (184; 204), mittels der Daten der Schubgeschwindigkeit der Formulare erzeugt werden, um Synchronisationssignale für schriftzeichen zu erzeugen, die in ausgerichteten Kästchen entsprechend geeigneten Reihen (186 - 192; 206 - 210) geschrieben sind.

6. Das Verfahren nach Anspruch 5, dadurch gekennzeichnet, daß alternativ die Lesedaten erzeugenden vormarkierten Zonen (184; 204) durch Räder ersetzt werden können, die durch die Blätter der Formulare (180; 200) bewegt werden und Synchronisationssignalerzeugungseinrichtungen betätigen.

7. Ein Verfahren zum periodischen Übertragen mittels des Verfahrens zum Betreiben einer Fernschreibervorrichtung gemäß einem der vorhergehenden Ansprüche von Buchungsdaten zu einem Benutzer eines Meßgerätes zum Messen von Dienstleistungen, und um es dem Benutzer zu ermöglichen, die Rechnung zu kontrollieren und an einen Dienstleistungsanbieter an einem Fernsprechteilnehneranschluß zu bezahlen, mit den Schritten:
i) Sammeln von auf eine von dem Teilnehmer genutzte Dienstleistung bezogenen Dienstleistungsdaten von einem einem Fernsprechgerät (158) zugeordneten Verbrauchsmeßgerät (170), das bei dem Fernsprechteilnehmer installiert ist, für einen bei einer Anbieterstelle (120) installierten Zentralcomputer (126), und Speichern der Dienstleistungsdaten in einem Speicher des Zentralcomputers (126);
ii) Verarbeiten der Dienstleistungsdaten und eines entsprechenden Dienstleistungstarifs für die in dem Speicher des Zentralcomputers (126) gespeicherten Dienstleistungsdaten, um eine auf eine gegebene Zeitperiode bezogene Dienstleistungsgebühr einschließlich zusätzlicher Gebühren und Steuern zu erhalten;
iii) Zusammenstellen der Dienstleistungsdaten, des Dienstleistungstarifs und der Dienstleistungsgebühr mit allen anderen mit dem Benutzer in Beziehung stehenden und in dem Speicher des Zentralcomputers (126) gespeicherten Daten, deren Erscheinen in einer Rechnung beabsichtigt ist;
**gekennzeichnet durch**
a) periodisches Senden der zusammengestellten, dem Teilnehmer zugeordneten Daten von dem bei der Anbieterstelle (120) installierten Zentralcomputer (126) durch das Fernsprechgerät (158) bei dem Fernsprechteilnehmer zu einem in einer Rechen- und Druckeinheit (156) enthaltenen Mikroprozessor (12), der an dem Teilnehmeranschluß installiert ist, und Speichern der Daten in einem Speicher des Mikroprozessors (12), wobei die zusammengestellten Daten durch eine Datenübertragungsleitung (152) gesendet werden;
b) Senden eines Befehls von dem Zentralcomputer (126) durch die Datenübertragungsleitung (152) zu dem Mikroprozessor (12) zum Drucken der in dem Mikroprozessor (12) gespeicherten Daten auf ein freies Rechnungsformular (24), das für den Teilnehmer bei der Anbieterstelle erhältlich ist;
c) Bedrucken des von dem Teilnehmer einem Druckgerät (156) zugeführten leeren Rechnungsformulares (24), das sich ergebende Rechnungsformular (157), das Dokument, das es dem Teilnehmer erlaubt, die in Rechnung gestellten Daten zu kontrollieren und die Zahlung für die in Anspruch genommene Dienstleistung auszuführen.

8. Das Verfahren nach Anspruch 7,
**gekennzeichnet durch**
Durchführen von Funktionen zum Sammeln und Speichern der Dienstleistungsdaten in dem Zentralcomputer (126) durch die Datenübertragungsleitung (152), die den Zentralcomputer (126) mit dem Mikroprozessor (12) verbindet, in dem die von dem Meßgerät (170) bei dem Verbraucher stammenden Dienstleistungsdaten gespeichert werden.

9. Das Verfahren nach Anspruch 7,
**gekennzeichnet durch**
das periodische Durchführen der Funktionen des Sammelns und Speicherns der Dienstleistungsdaten in dem Zentralcomputer (126).

10. Das Verfahren nach Anspruch 7,
**gekennzeichnet durch** den weiteren Schritt:
Senden einer Nachricht von dem Zentralcomputer (126) zu dem entfernten Mikroprozessor (12) durch die Datenübertragungsleitung (152) zum Anzeigen von Zahlungsungenauigkeiten an den Benutzer und Ratschlägen zur Beseitigung.

11. Das Verfahren nach Anspruch 7,
**gekennzeichnet durch** den weiteren Schritt:
Senden einer Nachricht von dem entfernten Prozessor (12) zu dem Zentralcomputer (126) durch die Datenübertragungsleitung (152) zum Anfordern von Informationen, Erklärungen und Korrekturen von zumindest einem Teil der zusammgestellten Daten.

12. Verwenden des Verfahrens zum Betreiben einer Fernschreibervorrichtung nach den Ansprüchen 1 bis 6 an einem Fernsprechteilnehmeranschluß, um auf Daten von Meßgeräten beruhende Informationen die sich auf Buchung und Zahlungen von mittels Meßgeräten meßbarer Dienstleistungen beziehen, zur Messung von Produkten oder Dienstleistungen, die jedem Teilnehmer an einem Teilnehmeranschluß zur Verfügung gestellt werden, in Beziehung zu einem Zentralrechnungscomputer (126) an einem anderen Ort zu setzen,
**gekennzeichnet durch** die Schritte:
a) Senden von Daten von dem Rechnnungscomputer durch die Telefonleitung (152), um jedem mit der Fernschreibervorrichtung ausgestatteten Teilnehmer vor der Buchung eine Buchungsnachricht zuzustellen;
b) Senden aller zum Vorbereiten von auf die Buchung bezogenen Informationen notwendigen Daten von dem Zentralcomputer (126) durch ein Empfangs-Modem (154) und eine Rechen- und Druckeinheit (156) zum Drucken von Buchungsdaten auf ein leeres Formular (24);
c) Steuern der Funktion der Druckeinheit (156) am Fernsprechteilnehmeranschluß frei vom Zugriff des Teilnehmer auf die Druckeinheit (156) an dem Teilnehmeranschluß;
d) Drucken von Buchungsdaten mit einem Drucker (156) an dem Teilnehmeranschluß auf das Formular (24), um ein bedrucktes Formular (157) zu erhalten.

13. Die Verwendung des Verfahrens nach Anspruch 12,
**dadurch gekennzeichnet, daß**
der Ausführungsschritt das Durchführen von weiteren Vorgängen einschließt, bei denen das Formular (157) mit von der Rechen- und Druckeinheit (156) zugeführten Daten verwendet wird.

14. Die Verwendung des Verfahrens nach Anspruch 13,
**gekennzeichnet durch**
Datenübertragung zu einem entfernten Ort unter Verwendung des Formulars (157), wobei die von der Rechen- und Druckeinheit (156) abgegebenen Daten in Form unterschiedlicher Daten abgegeben werden.

15. Die Verwendung des Verfahrens nach Anspruch 14,
**gekennzeichnet durch**
die Verwendung von durch die Rechen- und Druckeinheit (156) an dem Teilnehmeranschluß erzeugten Daten zum Senden von Datenanweisungen (160) zu einem entfernten Ort (140).

16. Die Verwendung des Verfahrens nach Anspruch 15,
**gekennzeichnet durch**
die Verwendung einer Tastatur und Anzeigeanordnung (162) zum Übertragen der Datenanweisungen (160) zu dem entfernten ort (140) durch eine Telefonleitung (152), wobei die Rechen- und Druckeinheit (156) und das Modem (154) verwendet werden.

17. Die Verwendung des Verfahrens nach Anspruch 15,
**ferner gekennzeichnet durch**
das Schreiben der Anweisung (160) auf ein Datenübertragungsformular (180) und Verwenden einer optischen Leseeinheit (34), die mit einer Vorrichtung an dem Teilnehmeranschluß verbunden ist, umd das DatenÛbertragungsformular (180) zu lesen.

18. Die Verwendung des Verfahrens nach Anspruch 12,
**gekennzeichnet durch**
der Verwendung von an den anderen Ort vorhandenen Zählern (122) zum Erzeugen von Daten für den Rechnungscomputer (126) zum Vorbereiten der Buchungsnachricht und Senden der Buchungsnachricht von dem Rechnungscomputer (126) an den Teilnebmeranschluß, einschließlich des Sendens spezieller Anordnungen (144a) wie beispielsweise Parametern zur Einschränkung oder Einstellung von Dienstleistungen, beruhend auf speziellen Situationen.

19. Die Verwendung des Verfahrens nach Anspruch 12,
**gekennzeichnet durch**
das Verwenden des an dem Teilnehmeranschluß vorhandenen Meßgerätes (170) und des Rechnungscomputers (126) an dem anderen Ort, um periodische Anweisungen (128b) zu dem Teilnehmer zu senden, um das Meßgerät (170) abzulesen, und Übertragen der von dem anderen Ort gelesenen Daten, wobei der Rechnungscomputer (126) dann für die Zusammenstellung von Rechnungen und / oder Zahlungsformularen geeignete Buchungsdaten durch die Rechen- und Druckeinheit (156) an dem Teilnehmeranschluß zu dem Teilnehmeranschluß sendet.

20. Die Verwendung des Verfahrens nach Anspruch 12,
**gekennzeichnet durch**
die Verwendung optischer Leseeinheiten (34) zum direkten Lesen des Meßgerätes (170) an dem Teilnehmeranschluß durch den Rechnungscomputer (126), und periodisches Zuführen von Energie zu den Meßgeräten durch die Computer (126) durch eine Schnittstelle (172) zwischen dem Meßgerät (170) und der Rechen- und Druckeinheit (156) bei dem Teilnehmer, und das in die Lage versetzen des Rechners (126) auf der anderen Seite, un dem Teilnehmer spezielle Anweisungen (144a) wie beispielsweise Anweisungen für die Einschränkung oder das Einstellen von Dienstleistungen aufgrund einer speziellen Situation zu senden.

## Revendications

1. Procédé d'exploitation d'un appareil de télé-impression à installer au domicile d'un abonné au téléphone, qui comprend un microprocesseur (12) et un modem (14) reliant une ligne téléphonique (16) soit audit microprocesseur (12), soit à un poste téléphonique classique (18), en fonction du type de signal de sonnerie reçu en provenance dudit modem (14),
ledit procédé étant caractérisé en ce que le microprocesseur (12) fait la distinction entre un signal de sonnerie d'un appel téléphonique classique et un signal de sonnerie de transmission de données, grâce à un paramètre distinctif dudit signal de sonnerie comme la durée du premier signal de sonnerie, de façon à brancher la ligne téléphonique (16) soit au poste téléphonique (18) soit au microprocesseur (12), ledit microprocesseur (12) fournit un accusé de réception des données reçues en faisant la distinction entre des données valides ou légales, pour lesquelles une action doit être entreprise, et des données non valides ou illégales pour lesquelles aucune action ne doit être entreprise hormis l'enregistrement de leur illégalité,
et caractérisé en outre en ce que, lorsque le microprocesseur (12) reçoit des premières données valides ou légales, il les enregistre puis attend des secondes, troisièmes, quatrièmes données, etc. et, à la réception de la fin du signal de transmission, il évalue si les données sont transmises avec un code redondant, permettant d'éviter les pertes d'information, envoyant une réponse de données non acceptées si ce code n'est pas présent et une réponse de données acceptées s'il est présent, mettant à exécution l'instruction considérée comme légale et transmise avec un code redondant et poursuivant ensuite le traitement jusqu'à l'arrivée d'un signal de séparation par lequel le modem (14) débranche le microprocesseur (12) de la ligne téléphonique (16),
tandis qu'en réponse aux données valides reçues, et en fonction d'elles, ledit microprocesseur (12) est connecté aux unités périphériques qui lui sont associées, comme une imprimante (22) ou un écran (38), pour leur transférer les données valides enregistrées, ou bien à une unité (34) de lecture optique qui lit des messages écrits et transfère ensuite les données correspondantes de l'appareil à des centres externes.

2. Procédé d'exploitation d'un appareil de télé-impression selon la revendication 1, caractérisé en ce que, selon une autre possibilité, ledit microprocesseur (12) permet, en fonction des données valides reçues, la connexion de la ligne (16) avec une interface (30) d'un ordinateur personnel se trouvant au domicile de l'abonné.

3. Procédé selon la revendication 1, caractérisé en ce que le microprocesseur (12) commande le modem (14) pour permettre la transmission d'une réponse de l'utilisateur à une agence ou un service public.

4. Procédé selon la revendication 3, caractérisé en ce que la réponse peut être fournie par l'intermédiaire d'un clavier périphérique (42) permettant de taper et d'envoyer des messages.

5. Procédé selon la revendication 3, caractérisé en ce que la réponse peut être fournie par l'intermédiaire d'une unité (34) de lecture optique qui peut lire des messages écrits sur des formulaires appropriés (180, 200) comportant une zone repérée (184, 204) par laquelle sont fournies des données de vitesse de glissement desdits formulaires afin de produire des signaux de synchronisation pour des caractères écrits dans des cases alignées suivant des rangées appropriées (186-192; 206-210).

6. Procédé selon la revendication 5, caractérisé en ce que, suivant une autre possibilité, ladite zone repérée à l'avance (184, 204) fournissant des données de lecture peut être remplacée par des roues déplacées par les feuilles desdits formulaires (180; 200) et actionnant des générateurs de signaux de synchronisation.

7. Procédé pour transmettre périodiquement, à l'aide du procédé d'exploitation d'un appareil de télé-impression conforme à l'une quelconque des précédentes revendications, des données de facturation à l'utilisateur d'un compteur servant à mesurer un service, et pour permettre à l'utilisateur de contrôler et de payer la facture à un fournisseur du service au domicile de l'abonné au téléphone, comprenant les étapes consistant à:
i) recueillir des données de service se rapportant à un service utilisé par un utilisateur auprès d'un compteur (170), associé à un poste téléphonique (158) installé au domicile d'un abonné au téléphone, pour les fournir à un ordinateur central (126) installé chez le fournisseur (120) et mémoriser lesdites données de service dans la mémoire dudit ordinateur central (126),
ii) traiter les données de service et un tarif de service correspondant auxdites données de service mémorisées dans la mémoire dudit ordinateur central (126), pour obtenir le prix du service concernant une période de temps donnée, y compris les charges et taxes additionnelles,
iii) assembler lesdites données de service, ledit tarif et les charges avec toutes les autres données concernant l'utilisateur qui sont mémorisées dans la mémoire dudit ordinateur central (126) et qui doivent apparaître sur une facture,
caractérisé par :
a) l'envoi périodique, par l'intermédiaire du poste téléphonique (158) se trouvant chez l'abonné, des données assemblées relatives à l'utilisateur, de l'ordinateur central (126) installé chez le fournisseur (120) à un microprocesseur (12) incorporé dans une unité de calcul et d'impression (156) installée chez l'utilisateur, et la mémorisation desdites données dans la mémoire dudit microprocesseur (12), lesdites données assemblées étant envoyées par l'intermédiaire d'une ligne de communication (152),
b) l'envoi d'un ordre, dudit ordinateur central (126) audit microprocesseur (12), par la ligne de communication (152), pour imprimer les données mémorisées dans ledit microprocesseur (12) sur un formulaire de facturation vierge (24) que l'utilisateur peut se procurer chez le fournisseur, et
c) l'impression du formulaire de facturation vierge (24), placé par l'utilisateur dans une machine d'impression (156), le formulaire de facturation résultant (157) étant un document qui permet à l'utilisateur de contrôler les données de la facture et de procéder au paiement du service reçu.

8. Procédé selon la revendication 7, caractérisé par le fait qu'on procède aux opérations de collecte et de mémorisation des données de service dans l'ordinateur central (126) par l'intermédiaire de la ligne de communication (152) qui relie ledit ordinateur central (156) audit microprocesseur (12) dans lequel sont stockées les données de service provenant du compteur (170) se trouvant chez l'utilisateur.

9. Procédé selon la revendication 7, caractérisé par le fait qu'il comprend la réalisation périodique des opérations de collecte et de mémorisation des données de service dans l'ordinateur central (126).

10. Procédé selon la revendication 7, caractérisé par le fait qu'il comprend en outre l'étape consistant à envoyer un message, de l'ordinateur central (126) au microprocesseur (12), par l'intermédiaire de la ligne de communication (152), pour signaler à l'utilisateur des anomalies de paiement et des avis pour y remédier.

11. Procédé selon la revendication 7, caractérisé par le fait qu'il comprend en outre l'étape consistant à envoyer un message, du microprocesseur (12) à l'ordinateur central (126), par l'intermédiaire de la ligne de communication (152), pour demander des informations, des explications et des corrections d'une partie au moins des données assemblées.

12. Utilisation du procédé d'exploitation d'un appareil de télé-impression conforme aux revendications 1 à 6, chez un abonné au téléphone, pour permettre qu'une information, concernant la facturation et le paiement de services mesurables par compteur et basée sur les données des compteurs, rapporte la mesure des produits ou services fournis à chaque utilisateur, en son domicile, à un ordinateur central de comptabilité (126) se trouvant en un autre site, caractérisé par les étapes consistant à:
a) envoyer des données depuis ledit ordinateur de comptabilité, par l'intermédiaire d'une ligne téléphonique (152), pour fournir à chaque utilisateur un message de facturation par l'intermédiaire dudit appareil de télé-impression, avant la facturation,
b) envoyer toutes les données nécessaires à la préparation d'une information concernant ladite facturation, depuis l'ordinateur central (126) et par l'intermédiaire d'un modem de réception (154), à une unité (156) de calcul et d'impression qui imprime les données de la facture sur un formulaire de facturation vierge (24),
c) commander l'opération de ladite unité d'impression (156), se trouvant au domicile de l'abonné au téléphone, sans que l'utilisateur puisse accéder à ladite unité d'impression (156) chez l'utilisateur, et
d) imprimer les données de facturation, avec une imprimante (156) et chez l'utilisateur, sur ledit formulaire (24) pour avoir un formulaire imprimé (157).

13. Utilisation du procédé selon la revendication 12, caractérisée en ce que l'étape d'éxécution inclut une action suplémentaire utilisant le formulaire (157) avec des données fournies par ladite unité de calcul et d'impression (156).

14. Utilisation du procédé selon la revendication 13, caractérisée en ce qu'elle comprend une transmission vers un site éloigné utilisant ledit formulairc (157), avec les données délivrées par ladite unité de calcul et d'impression (156), sous la forme de données différentes.

15. Utilisation du procédé selon la revendication 14, caractérisée en ce qu'elle comprend l'utilisation de données produites chez l'utilisateur par ladite unité de calcul et d'impression (156) pour envoyer des instructions (160) à un site éloigné (140).

16. Utilisation du procédé selon la revendication 15, caractérisée en ce qu'elle comprend l'utilisation d'un ensemble de clavier et d'écran (162) pour transmettre les instructions (160) audit site éloigné (140) par l'intermédiaire d'une ligne téléphonique (152) utilisant ladite unité de calcul et d'impression (156) et ledit modem (154).

17. Utilisation du procédé selon la revendication 15, caractérisée en ce qu'elle comprend l'écriture de l'instruction (160) sur un formulaire de communication (180) et l'utilisation d'une unité (34) de lecture optique couplée à un appareil se trouvant chez l'utilisateur pour lire le formulaire de communication (180).

18. Utilisation du procédé selon la revendication 12, caractérisée en ce qu'elle comprend l'utilisation de compteurs (122), présents en ledit autre site, pour fournir des données à l'ordinateur de comptabilité (126) en vue de la préparation dudit message de facturation, et l'envoi du message de facturation dudit ordinateur de comptabilité (126) au domicile dudit utilisateur, y compris l'envoi de dispositions spéciales (144a) comme des paramètres qui limitent ou suspendent le service cn raison de situations particulières.

19. Utilisation du procédé selon la revendication 12, caractérisée en ce qu'elle comprend l'utilisation du compteur (170) présent chez l'utilisateur et de l'ordinateur de comptabilité (126) se trouvant en un autre site pour envoyer des instructions périodiques (128b) à l'utilisateur afin qu'il lise le compteur (170) et la transmission des données lues depuis ledit autre site, ledit ordinateur de comptabilité (126) envoyant alors chez l'utilisateur des données de facturation appropriées à la compilation des formulaires de facturation ou de paiement, grâce à ladite unité de calcul et d'impression (156) se trouvant chez l'utilisateur.

20. Utilisation du procédé selon la revendication 12, caractérisée en ce qu'elle comprend l'utilisation de lecteurs optiques (34) pour que l'ordinateur de comptabilité (126) lise directement le compteur (170) chez l'utilisateur, la mise sous tension périodique dudit compteur par ledit ordinateur (126) grâce à une interface (172) entre ledit compteur (170) et ladite unité de calcul et d'impression (156) se trouvant chez l'utilisateur, et la possibilité pour l'ordinateur (126) se trouvant en l'autre site d'envoyer audit utilisateur des dispositions spéciales (144a) comme des instructions de limitation ou de suspension du service du fait d'une situation particulière.
